# EUROPEAN PATENT APPLICATION

(11) **EP 2 527 847 A1**
(43) Date of publication of application: **28.11.2012**
(21) Application number: 12168117.5
(22) Date of filing: 15.05.2012
(51) Int. Cl.: G01P 5/16, G01P 13/02, G01P 1/02

(54) **Aircraft wing and sensor**

(30) Priority: 26.05.2011 GB 201108855; 26.05.2011 EP 11275087
(71) Applicant: BAE Systems PLC, London SW1Y 5AD (GB)
(72) Inventor: Ellison, William, Frank, Preston, Lancashire PR4 1AX (GB)
(74) Representative: BAE SYSTEMS plc Group IP Department

(57) **Abstract**

Apparatus comprising an aircraft wing (10) and a sensing unit (8), wherein the sensing unit (8) comprises: a blister (14) on an underside of the aircraft wing (10); a first and second sensor, at least part of each sensor being either housed in the blister (14) or mounted on or integrated with an outer surface of the blister (14); wherein the first sensor is arranged to measure a first parameter; the second sensor is arranged to measure a second parameter; a measured value for the first parameter is dependent on a speed of the aircraft (2) in a first direction; a measured value for the second parameter is dependent on a speed of the aircraft (2) in a second direction; the first direction is in a plane perpendicular to an aircraft lateral axis; and the second direction is in a plane perpendicular to an aircraft roll axis.

## Description

### FIELD OF THE INVENTION

The present invention relates to an aircraft wing and sensing unit assembly.

### BACKGROUND

An aircraft's air data system measures outside air pressure to provide, for example, airspeed and altitude data to cockpit instruments.

Typically, air data systems use pressure sensors comprising forward (pitot) and side-facing (static) orifices on the surface of the aircraft. These orifices are linked to cockpit gauges, or pressure transducers, via small-diameter pneumatic tubing.

An air data system may also be required to measure angle of attack and sideslip. This may be used to provide stall warning, improved turn coordination, even stability augmentation etc.

Typically, angle of attack and sideslip are measured using airstream direction detectors (e.g. self-aligning vanes).

Alternatively, pressure and flow angle measurement capability may be combined in a single multi-function unit that integrates sensors, transducers, and software, to convert analogue measurements to calibrated digital output data. Multi-function probes may be self-aligning, or fixed designs that derive both pressure and flow angle data purely as a function of local measured absolute and differential pressures.

Generally, accurate, and redundant, air data is important for flight control and operation in controlled airspace. Air data accuracy may be achieved through the "optimal" location of air data sensors on the aircraft so as to minimise aircraft aerodynamic interference effects on air data. Multiple redundant sensors and transducers may be used to achieve reliability.

Typically, air data sensors are mounted on the aircraft forebody. However, achieving optimal locations of multiple sensors (even when multi-function air data probes are used) tends to be difficult due to the lack of space in the aircraft nose. Generally, non-optimal air data sensor locations demand more complex correction algorithms and tighter accuracy and repeatability tolerances in order to meet output parameter accuracy requirements.

Also, NASA developed a nose-mounted flush air data sensing (FADS) system. This system comprised an array of pressure tappings, transducers with off-aircraft modelled correction algorithms. Further information on this system can be found in NASA Technical Memorandum 104241, "Development of A Pneumatic High-Angle-of-Attack Flush Airdata Sensing (HI-FADS) System", S. A. Whitmore, November 1991.

NASA has also investigated the feasibility of mounting surface pressure tappings on the wings of an aircraft - potentially using the air data correction algorithms developed for the HI-FADS system. Further information can be found in NASA Technical Memorandum 104267, "Application of a Flush Airdata Sensing System to a Wing Leading Edge", S.A.Whitmore et al. February 1993.

Separately to mounting air pressure sensors on aircraft wings, US6,550,344 discloses a semi-flush air data sensing probe formed as an elongated bubble housing supported on a support surface. The sensing probe has a generally longitudinally extending rounded outer edge surface with a rounded contoured leading end. A forwardly facing port is at the leading end and centred on a central plane. Also, a pair of angle of attack sensing ports is on the leading end and these ports are symmetrically located on opposite sides of the central plane.

### SUMMARY OF THE INVENTION

In a first aspect, the present invention provides apparatus comprising an aircraft wing and a sensing unit, wherein the sensing unit comprises a blister positioned on an underside of the aircraft wing, a first sensor, at least part of the first sensor being either housed in the blister or mounted on or integrated with an outer surface of the blister, and a second sensor, at least part of the second sensor being either housed in the blister or mounted on or integrated with an outer surface of the blister, wherein the first sensor is arranged to measure a first parameter, the second sensor is arranged to measure a second parameter, a measured value for the first parameter is dependent on a speed of the aircraft in a first direction, a measured value for the second parameter is dependent on a speed of the aircraft in a second direction, the first direction is in a plane perpendicular to a lateral axis of the aircraft, and the second direction is in a plane perpendicular to a roll axis of the aircraft.

The first direction may have a component that is parallel to the roll axis of the aircraft, and the component of the first direction that is parallel to the roll axis of the aircraft may point towards a leading edge of the wing.

The apparatus may further comprise a third sensor, at least part of the third sensor being either housed in the blister, or mounted on or integrated with an outer surface of the blister, wherein the third sensor is arranged to measure a third parameter, a measured value for the third parameter is dependent on a speed of the aircraft in a third direction, the third direction is in a plane perpendicular to a lateral axis of the aircraft, and the third direction is different to the first direction.

The second direction may have a component that is parallel to a pitch axis of the aircraft, and the component of the first direction that is parallel to the pitch axis of the aircraft may point towards a tip of the wing.

The apparatus may further comprise a fourth sensor, at least part of the fourth sensor being either housed in the blister, or mounted on or integrated with an outer surface of the blister, wherein the fourth sensor is arranged to measure a fourth parameter, a measured value for the fourth parameter is dependent on a speed of the aircraft in a fourth direction, the fourth direction is in a plane perpendicular to the roll axis of the aircraft, the fourth direction has a component that is parallel to a pitch axis of the aircraft, and the component of the fourth direction that is parallel to the pitch axis of the aircraft points away from the tip of the wing.

Each parameter may be an air pressure.

Each of the sensors may comprise an opening in the outer surface blister, each opening being substantially flush with the outer surface of the blister.

Each respective opening may be connected to a respective transducer via a respective tube, and each respective transducer may be mounted in the aircraft wing such that drainage of water away from the transducer is facilitated.

The blister may be positioned at or proximate to a leading edge of the aircraft wing.

The blister may be substantially symmetrical about its longitudinal axis, the longitudinal axis of the blister being an axis that is substantially parallel to the roll axis of the aircraft.

The outer surface of the blister may be substantially contiguous with a surface of the underside of the aircraft wing.

The aircraft wing may have a high aspect ratio.

The blister may be positioned on an underside portion of the aircraft wing such that: the blister does not project from the underside of the aircraft wing beyond a leading edge of the aircraft wing in a direction parallel to a roll axis of the aircraft, and the blister does not project from the underside of the aircraft wing beyond a lowermost surface of the aircraft wing in a direction parallel to a yaw axis of the aircraft.

In a further aspect, the present invention provides a method of measuring values for parameters, the method comprising: using a first sensor, measuring a first parameter; using a second sensor, measuring a second parameter, wherein at least a part of the first sensor is either housed in a blister, or mounted on or integrated with an outer surface of the blister, at least a part of the second sensor is either housed in the blister, or mounted on or integrated with an outer surface of the blister, the blister is positioned on an underside of a wing of an aircraft, a measured value for the first parameter is dependent on a speed of the aircraft in a first direction, a measured value for the second parameter is dependent on a speed of the aircraft in a second direction, the first direction is in a plane perpendicular to a lateral axis of the aircraft, and the second direction is in a plane perpendicular to a roll axis of the aircraft.

In a further aspect, the present invention provides an aircraft comprising apparatus according to any of the above aspects.

### BRIEF DESCRIPTION OF THE DRAWINGS

Figure 1 is a schematic illustration (not to scale) of an example of an aircraft in which an embodiment of a multi-function air data sensor is implemented;
Figure 2 is a schematic illustration (not to scale) of an air data system onboard the aircraft;
Figure 3 is a schematic illustration (not to scale) of the sensor mounted on a wing of the aircraft;
Figure 4 is a schematic illustration (not to scale) showing the sensor mounted on the wing 10 as viewed from the side of the aircraft; and
Figure 5 is a schematic illustration (not to scale) showing the sensor mounted on the wing as viewed from the front of the aircraft.

### DETAILED DESCRIPTION

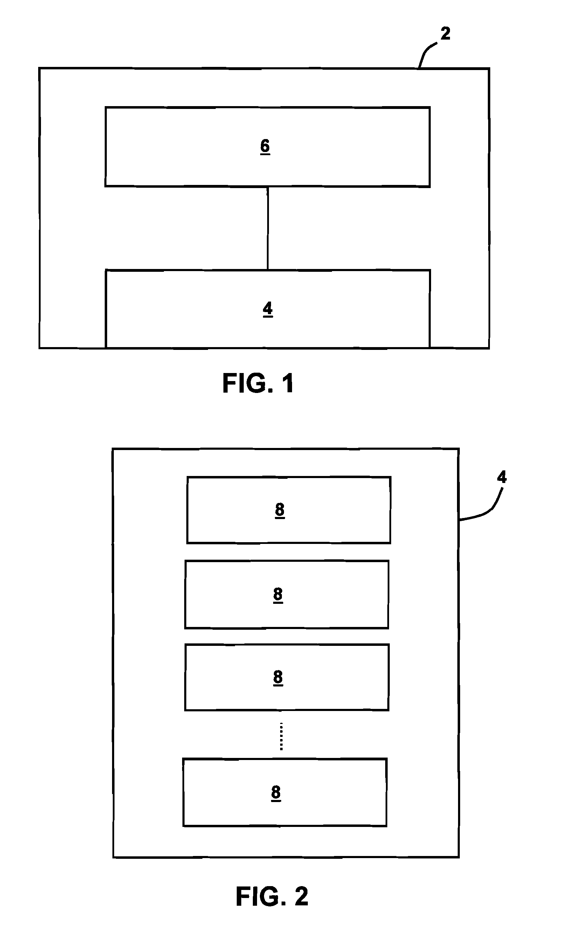

Figure 1 is a schematic illustration (not to scale) of an example of an aircraft 2 in which an embodiment of a multi-function air data sensor is implemented.

In this embodiment, the aircraft 2 comprises an air data system 4 and a processor 6.

The air data system 4 is described in more detail later below with reference to Figure 2.

In this embodiment, the air data system 4 is connected to the processor 6 such that, in operation, air pressure measurements made by the air data system 4 are sent form the air data system 4 to the processor 6.

In this embodiment, the processor 6 uses the air pressure measurements received from the air data system 4 to determine, for example, the airspeed, Mach number, altitude, altitude trend, angle of attack, and/or slideslip of the aircraft 2.

Figure 2 is a schematic illustration (not to scale) of the air data system 4.

In this embodiment, the air data system 4 comprises a plurality of multi-function air data sensors, each of which is hereinafter referred to as "the sensor 8". In this embodiment, each of the sensors 8 are substantially the same (though position differently on the aircraft).

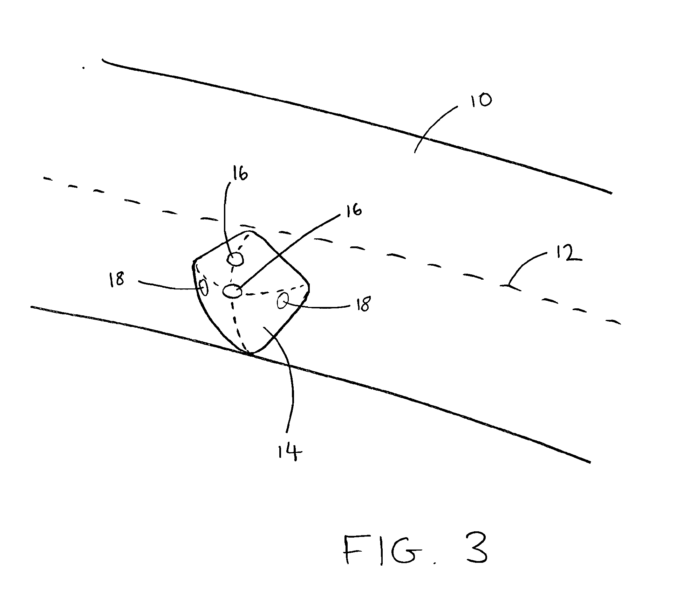

A sensor 8 is described in more detail later below with reference to Figures 3 to 5.

In this embodiment, each sensor 8 is located at a different position on a wing of the aircraft 2, as described in more detail later below with reference to Figures 3 to 5. This tends to provide that the air data at different points on the aircraft 2 is measured. Furthermore, in this embodiment, measurements taken by one or more of the pressure sensors 8 are used by the processor 6 to determine, for example, the airspeed, Mach number, altitude, altitude trend, angle of attack, and sideslip of the aircraft 2.

Figure 3 is a schematic illustration (not to scale) of a sensor 8 mounted on a wing 10 of the aircraft 2.

In Figure 3, the leading edge of the wing 10, i.e. the foremost edge of the wing's aerofoil cross-section, is indicated by a dotted line and the reference numeral 12.

In this embodiment, the sensor 8 comprises a blister 14 having a plurality of flush pressure ports installed over the surface of the blister 14.

The terminology "flush pressure ports" is used to refer to pressure ports (e.g. the openings or orifices of the tubes of a pitot-static pressure sensor) that are flush with the outer surface of the blister 14.

The terminology "blister" is used herein to refer to a rounded, bulging structure for mounting onto an outer surface of the aircraft 2 in which products (e.g. sensors, transducers etc) may be carried. The blister 14 tends to provide protection of packaged products.

In this embodiment each of the plurality of flush pressure ports is connected to a wing-mounted pressure transducer via flexible tubing (not shown in the Figures). The lower leading edge location of the blister 14 tends to facilitate the installation of transducers above the pressure ports, thereby advantageously providing that water in the flexible tubing tends to drain away from the transducers when the aircraft 2 is on the ground.

In this embodiment there are four flush pressure ports installed over the surface of the blister 14.

Two of the flush pressure ports are positioned on the blister 14 such that they tend to be particularly sensitive to changes in the airspeed and/or angle of attack of the aircraft 2. These flush pressure ports are hereinafter referred to as the "airspeed flush ports" and are indicated in Figure 3 by the reference numeral 16.

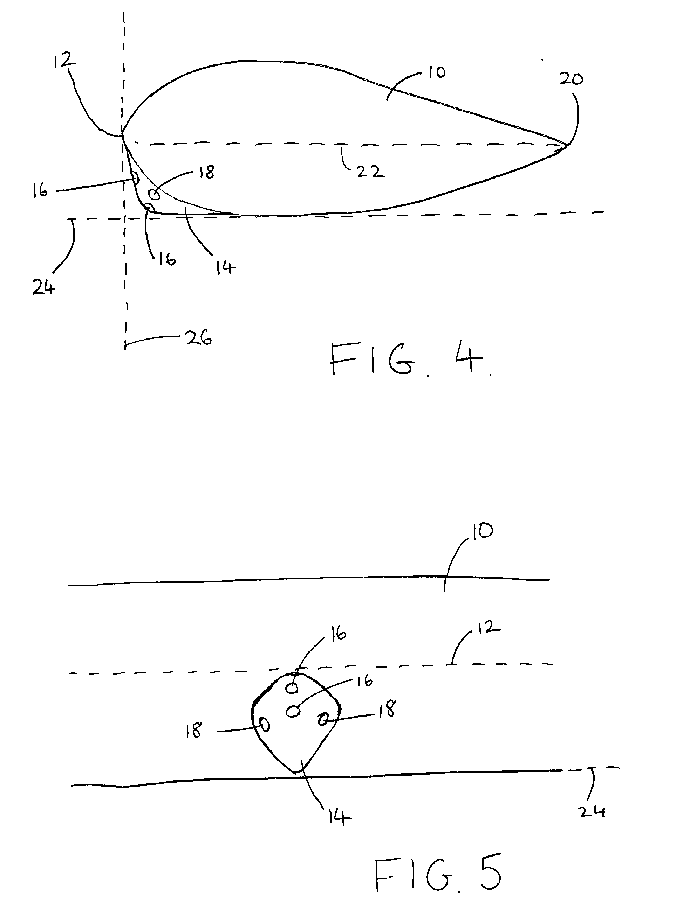

In this embodiment, the airspeed flush ports 16 are positioned on the blister 14 such that, when the blister is on the aircraft wing 10 (as described in more detail later below with reference to Figures 4 and 5), the airspeed flush ports 16 lie within a plane that is perpendicular to a lateral (pitch) axis of the aircraft 2. In other words, the airspeed flush ports 16 lie within a plane that is substantially perpendicular to a line that connects the wingtips of the aircraft 2.

Furthermore, in this embodiment the airspeed flush ports 16 each point in a direction that lies substantially in the plane perpendicular to a lateral (pitch) axis of the aircraft 2. In other embodiments, the airspeed flush ports 16 may be positioned differently, e.g. they may be displaced from the plane perpendicular to a lateral (pitch) axis of the aircraft 2 to account for installation and aerodynamic performance requirements.

Furthermore, in this embodiment each of the airspeed flush ports 16 point forward (relative to the aircraft 2) to some degree.

Furthermore, in this embodiment the airspeed flush ports 16 point in substantially different directions to each other.

This positioning of the airspeed flush ports 16 tends to provide that the differential air pressure experienced between these ports is substantially proportional to the square of the airspeed of the aircraft 2 through the air. Also, the different airspeed flush ports 16 tend to experience different relative pressures depending on the aircraft's angle of attack. Thus, the pressures measured at the airspeed flush ports 16 may be used by the processor 6 to determine the airspeed and angle of attack of the aircraft 2.

The other two of the flush pressure ports (i.e. not the airspeed flush ports 12) are positioned on the blister 14 such that they tend to be particularly sensitive to aircraft sideslip. These flush pressure ports are hereinafter referred to as the "sideslip flush ports" and are indicated in Figure 3 by the reference numeral 18.

In this embodiment, the sideslip flush ports 18 are positioned on the blister 14 such that, when the blister is on the aircraft wing 10 (as described in more detail later below with reference to Figures 4 and 5), the sideslip flush ports 18 lie substantially within a plane that is perpendicular to a longitudinal (roll) axis of the aircraft 2. In other words, the sideslip flush ports 18 lie within a plane that is substantially perpendicular to a line that connects the nose and tail of the aircraft 2.

Furthermore, in this embodiment the sideslip flush ports 18 each point in a direction that lies substantially in the plane perpendicular to a longitudinal (roll) axis of the aircraft 2. In other embodiments, the sideslip flush ports 18 may be positioned differently, e.g. they may be displaced from the plane perpendicular to a longitudinal (roll) axis of the aircraft 2 to account for installation and aerodynamic performance requirements.

Furthermore, in this embodiment each of the sideslip flush ports 18 point in opposite directions to some degree. In other words, in this embodiment one or the sideslip flush ports 18 points towards one wing tip, and the other sideslip flush ports 18 points towards the other wingtip.

This positioning of the sideslip flush ports 18 tends to provide that the air pressure experienced at these ports is indicative of the sideslip experienced by the aircraft 2. Thus, the pressures measured at the sideslip flush ports 18 may be used by the processor 6 to determine the sideslip experienced by the aircraft 2.

In this embodiment, pressures measured at each of the pressure ports (i.e. the airspeed flush ports 16 and the sideslip flush ports 18) are used in the derivation of static pressure (from which pressure altitude may be derived).

In this embodiment, the blister is positioned on an underside of the wing 10 proximate to the leading edge 12 of the wing 10. The positioning and shape of the blister 14 is described in more detail later below with reference to Figures 4 and 5.

Figure 4 is a schematic illustration (not to scale) showing the sensor 8 mounted on the wing 10 as viewed from the side of the aircraft 2 (i.e. as viewed from a tip of the wing 10 in a direction parallel to the pitch axis of the aircraft 2 towards the opposite wingtip).

Figure 5 is a schematic illustration (not to scale) showing the sensor 8 mounted on the wing 10 as viewed from the front of the aircraft 2 (i.e. as viewed from the leading edges 12 of the wing 10 in a direction parallel to the longitudinal axis of the aircraft 2 towards the trailing edge 20 of the wing 10).

In Figure 4, the rearmost edge of the aerofoil shape of the wing 10, i.e. the trailing edge of the wing 10, is indicated by the reference numeral 20.

Also, the "chord" of the aerofoil shape of the wing 10 is indicated in Figure 4 by a dotted line and the reference numeral 22.

In Figures 4 and 5, the line parallel to the chord 22 and in contact with the lowermost point of the aerofoil shape of the wing 10 is hereinafter referred to as the "lower profile" of the wing 10 and is indicated in Figure 4 by a dotted line and the reference numeral 24.

In Figure 4, the line perpendicular to the chord 22 (and the lower profile 24) and in contact with the leading edge 12 of the wing 10 is hereinafter referred to as the "front profile" of the wing 10 and is indicated in Figure 4 by a dotted line and the reference numeral 26.

In this embodiment, the blister 14 is has a rounded shape that, when fitted to the underside of the aircraft wing 10, projects from the outer surface of the wing 10 as a relatively smooth bump. This shape tends to provide that the effects of the sensor 8 on the aircraft's aerodynamic properties are substantially minimised.

In this embodiment, an edge of the blister 14, or side of the blister 14, that is in contact with the wing 10 when the blister 14 is fitted to the underside of the wing 10 conforms to the shape of that portion of the wing 10.

Also, in this embodiment the blister 14 has a shape that is substantially symmetrical about its central (longitudinal) axis, i.e. an axis that is substantially parallel to the longitudinal axis of the aircraft 2 when the blister 14 is fitted to the underside of the wing 10.

In this embodiment, the blister 14 is fitted to the wing 10 such that, when the aircraft 2 is viewed from the side (i.e. the view shown in Figure 4), the blister 14 is positioned as close as possible to the leading edge 12 of the wing 10 without protruding beyond the leading edge 12 (i.e. with no part of the blister protruding beyond front profile 26 of the wing 10).

This positioning of the blister 14 as close as possible to the leading edge 12 without protruding beyond the front profile 26 tends to be a substantially optimal location for pressure sensing under a constraint that the blister is substantially conformal with the wing plan-form and front profile, and affixed to the underside of the aircraft wing. This position advantageously tends to minimise the effects of wing surface irregularities on sensor measurement repeatability.

Also, in this embodiment the blister 14 is fitted to the wing 10 such that, when the aircraft 2 is viewed from the side (i.e. the view shown in Figure 4) and/or the front (i.e. the view shown in Figure 5), the blister 14 does not protrude lower than the lowermost point of the aerofoil shape of the wing 10 (i.e. no part of the blister protrudes beyond lower profile 24 of the wing 10).

This positioning of the blister 14 on the underside of the wing 10 may advantageously minimise a risk of affecting upper wing airflow. This may reduce or minimise problems of separation and/or wing stall.

Moreover, this positioning of the blister 14 such that it is conformal with the wing plan-form and front profile (i.e. such that the blister 14 does not protrude beyond the lower profile 24 and front profile 26 of the wing 10) tends to advantageously reduce a risk of damage to the sensor 8 during ground operations.

In this embodiment, the blister is mounted to the aircraft wing such that the outer surface of the blister is substantially contiguous with a surface of the underside of the aircraft wing. The outer surface of the blister and the underside of the aircraft wing share a common boundary. Also, in this embodiment there is no 'break' or discontinuity in the surface that is provided by the outer surface of the blister and the underside of the aircraft wing.

Thus, a wing-mounted multi-function air data sensor that comprises a leading-edge blister housing multiple flush pressure ports installed over its surface is provided.

An advantage provided by the above described sensor is that the provision of sensing ports on an 'external' blister tends to provide additional internal space for pressure sensors, compared to the internal space conventionally available in the wing leading edge.

A further advantage provided by the above described sensor is the orientation of the ports (of the pressure sensors/pitot static systems, i.e. the airspeed and sideslip flush ports) are such that the ports tends to be less vulnerable to water ingress when the aircraft is on the ground.

A further advantage provided by the shape of the blister is that the protrusion of the blister from the underside of the wing tends to provide that ports that are sensitive to variations in air velocity, i.e. both air speed and direction, may be housed. This sensitivity tends to be particularly useful for the calculation of aircraft angle of attack and sideslip.

The above described sensor tends to function (in combination with its connected pressure transducers) as a stand-alone multi-function air data sensor.

The blister may advantageously be retrofitted to outboard wing sections.

The position of the sensor on an outboard wing section of an aircraft tends to advantageously eliminate, or reduce, aerodynamic interference effects on air data due to the configuration of the aircraft forebody, undercarriage, engine inlet or propeller air flow, under-fuselage and under-wing stores. Also, the position of the sensor on an outboard wing section of an aircraft tends to reduce aerodynamic interference on air data due to wing control surface deflection, if lateral separation between sensor and control surface can be achieved.

Typically, where significant sources of aerodynamic interference on air data measurements are expected, test-data are obtained to aid in the design of correction algorithms. These test-data may be obtained from wind tunnel testing of an instrumented aircraft model. Also, data may be obtained from Computational Fluid Dynamics (CFD) modelling.

For many aircraft, it is possible to obtain air data system design/test data from stability and control (S&C) models as a "ride-along" (i.e. the model being instrumented primarily to measure aerodynamic loads and moments, but with additional instrumentation for air data). However, this tends not to be practicable for an aircraft model with a high-aspect ratio wing.

The aspect ratio is defined as the square of the wing span divided by the wing area. The terminology "high-aspect ratio" is used herein to refer to an aspect ratio of greater than or equal to 8.

A model scale that ensures the aircraft model (with a high-aspect ratio wing) fits in a typical wind tunnel would tend to have insufficient space in the model forebody to mount sensors (e.g. pressure tappings, moving vanes, five-hole probes). These tend to be required to obtain the design/test air data required. Also, it tends not to be practicable to model engine prop effects on such a model.

Thus, an additional air data dedicated, larger scale forebody aircraft model (e.g. with stub-wings) may be required to obtain the required design/test air data.

Advantageously, this additional model tends not to be needed when the sensor is positioned on an outboard wing section of an aircraft, as described in the above embodiments.

Also, design/test data for a wing-mounted sensor/blister may advantageously be primarily obtained from CFD analysis. Data from "ride-along" wind tunnel testing may be used to validate CFD predictions. The primary aerodynamic interference effects on wing-mounted leading edge pressure sensors tend to be only (local) angle of attack, and sideslip. By locating the flush ports of the sensor sufficiently outboard of wing control surfaces, control deflection effects on air data tends to be reduced.

Furthermore, it tends to be possible to obtain all the design data (including Reynolds number, wing deflection and ground effects) required for ADS correction algorithm development using CFD data. Stability and Control model ride-along measurements may be used to validate the CFD predictions. These measurements may be obtained from a small number of pressure tappings in the wing outboard sections. Such pressure tappings tend to be sufficient to characterise the local flow conditions and calibrate the CFD data.

The above described wing mounted air data may be used on relatively low aspect ratio wings (i.e. wing having an aspect ratio of less than 8). In such cases it is preferable to laterally separate sensors from sources of significant aerodynamic interference, for example the forebody, undercarriage, engine inlet or props, under-wing stores and pylons, outboard wing control surfaces and so on. Also, it is preferable not to position a wing mounted sensor too close to a wing tip. Preferably, the lateral and wing tip separation for blister locations is greater than 1.5 metres.

The position of the sensor on an outboard wing section of an aircraft tends to advantageously eliminate, or reduce possible mutual electro-magnetic interference effects between air data transducers and forebody-mounted avionics.

Installing the sensors/blister around the wing leading edge advantageously tends to provide that the aerodynamic build standard of the aircraft is easier. This tends to provide improved air data measurement repeatability.

Moreover, many access panels tend to be needed for forebody avionics bays. Build standard control tends to be difficult for access panels. This problem is advantageously addressed by providing the wing mounted sensor/blister.

Installing the air data pressure sensors outboard of wing-mounted engines, underwing pylons and/or control surfaces advantageously tends to reduce or minimise their aerodynamic interference effects on air data measurements.

A further advantage provided by the above described wing-mounted sensor/blister is that greater lateral separation between missile pylons and air data sensors is achievable with the sensors located outboard on the wings. This increased separation between sensors and missile release point tends to reduce the risk, or severity, of plume impingement effects and debris ingestion on air data (compared to forebody installation).

Probe and vane type air data sensors are at risk of damage during ground maintenance (e.g. breakdown/assembly), weapon loading operations, and transportation. This risk tends to be reduced or eliminated by providing that no part of the blister protrudes beyond the front profile of the wing and that no part of the blister protrudes beyond the lower profile of the wing. Also, flush mounted sensors tend to be at lower risk of damage in these conditions.

A further advantage provide by the above described sensor is that multiple such sensor may be relatively easily mounted to the aircraft at different span-wise locations on the wing. Multiple blister sensors tend to provide sensor redundancy. Also, the physical separation of the sensors tends to reduce vulnerability of the sensing system to damage from bird-strike, Foreign Object Damage (FOD), and/or battle damage.

Physical separation of wing-mounted sensors tends to be easier to achieve (in particular for the high aspect ratio wings e.g. of long endurance aircraft) than physical separation of sensors installed on the aircraft forebody. Additionally, power and databus connections may be routed separately down wing leading and trailing edges to minimise the risk of a single bird, or munition, impact affecting two air data sources simultaneously.

The mounting of the sensor on the wing of the aircraft frees the aircraft nose cone, e.g. for the installation of a radar. Thus, it tends to be possible to have no air data sensors located on the aircraft forebody. This tends to ensure that variations in forebody lines arising from mission fit changes or other aircraft upgrades will not affect air data calibration.

Preferably, the mission equipment fit of a long-endurance military aircraft may be changed during the aircraft's operational life (e.g. between missions). This provides a degree of flexibility in the use of a valuable asset. Thus, significant alterations to the external profile of the aircraft's forebody, and internal equipment arrangements (e.g. arising from changes of sensor turrets, radar arrays, or communications antennae) may result. Modifications to forebody profile of the aircraft may necessitate some recalibration of air data sensors located in the forebody to account for changes to aerodynamic interference on air data. The mounting of the air data sensor on the wing of the aircraft tends to overcome this problem. In the above embodiments, the sensor comprises four flush pressure ports that are positioned on the blister as described above (with reference to Figure 3) such that the ports are sensitive to changes in the aircraft's airspeed or sideslip. However, in other embodiments the sensor comprises a different number of flush pressure ports. Also, in other embodiment one or more of the flush pressure ports is positioned on the blister in a different way to that described above.

In the above embodiments, the blister of the sensor houses sensing apparatus for sensing air pressures. However, in other embodiments the blister may comprise different sensing apparatus instead of or in addition to the air pressure sensing apparatus. For example, in other embodiments the blister comprises a camera (e.g. a visible light camera having a lens aperture flush with the outer surface of the blister). Also, in other embodiments, the blister is used to house a different system or apparatus (i.e. not sensing apparatus) instead of or in addition to the above mentioned sensing apparatus.

In the above embodiments, the blister of the sensor is in the shape described above with reference to Figures 4 and 5. When fitted to the underside of the aircraft wing, the blister is a relatively smooth bump (i.e. a rounded protrusion). Also, the blister is substantially symmetrical about its central axis. However, in other embodiments the blister is a different appropriate shape such that the above described functionality is provided, i.e. such that an edge or side of the blister that is in contact with the wing when the blister is fitted to the underside of the wing substantially conforms to the shape of that portion of the wing, and such that the blister is substantially conformal with the wing plan-form and front profile (i.e. such that the blister does not protrude beyond the lower profile and front profile of the wing).

## Claims

1. Apparatus comprising an aircraft wing (10) and a sensing unit (8), wherein the sensing unit (8) comprises:
a blister (14) positioned on an underside of the aircraft wing (10);
a first sensor, at least part of the first sensor being either housed in the blister (14) or mounted on or integrated with an outer surface of the blister (14); and
a second sensor, at least part of the second sensor being either housed in the blister (14) or mounted on or integrated with an outer surface of the blister (14); wherein
the first sensor is arranged to measure a first parameter;
the second sensor is arranged to measure a second parameter;
a measured value for the first parameter is dependent on a speed of the aircraft (2) in a first direction;
a measured value for the second parameter is dependent on a speed of the aircraft (2) in a second direction;
the first direction is in a plane perpendicular to a lateral axis of the aircraft (2); and
the second direction is in a plane perpendicular to a roll axis of the aircraft (2).

2. Apparatus according to Claim 1, wherein the first direction has a component that is parallel to the roll axis of the aircraft (2), and the component of the first direction that is parallel to the roll axis of the aircraft (2) points towards a leading edge (12) of the wing (10).

3. Apparatus according to Claim 2, the apparatus further comprising:
a third sensor, at least part of the third sensor being either housed in the blister (14), or mounted on or integrated with an outer surface of the blister (14); wherein
the third sensor is arranged to measure a third parameter;
a measured value for the third parameter is dependent on a speed of the aircraft (2) in a third direction;
the third direction is in a plane perpendicular to a lateral axis of the aircraft (2);
the third direction is different to the first direction.

4. Apparatus according to any of Claims 1 to 3, wherein the second direction has a component that is parallel to a pitch axis of the aircraft (2), and the component of the first direction that is parallel to the pitch axis of the aircraft (2) points towards a tip of the wing (10).

5. Apparatus according to Claim 4, the apparatus further comprising:
a fourth sensor, at least part of the fourth sensor being either housed in the blister (14), or mounted on or integrated with an outer surface of the blister (14); wherein
the fourth sensor is arranged to measure a fourth parameter;
a measured value for the fourth parameter is dependent on a speed of the aircraft (2) in a fourth direction;
the fourth direction is in a plane perpendicular to the roll axis of the aircraft (2);
the fourth direction has a component that is parallel to a pitch axis of the aircraft (2); and
the component of the fourth direction that is parallel to the pitch axis of the aircraft (2) points away from the tip of the wing (10).

6. Apparatus according to any of Claims 1 to 5, wherein each parameter is an air pressure.

7. Apparatus according to Claim 6, wherein each of the sensors comprises an opening (16, 18) in the outer surface blister (14), each opening (16, 18) being substantially flush with the outer surface of the blister (14).

8. Apparatus according to Claim 7, wherein:
each respective opening (16, 18) is connected to a respective transducer via a respective tube; and
each respective transducer is mounted in the aircraft wing (10) such that drainage of water away from the transducer is facilitated.

9. Apparatus according to any of Claims 1 to 8, wherein the blister is positioned at or proximate to a leading edge (12) of the aircraft wing (10).

10. Apparatus according to any of Claims 1 to 9, wherein the blister (14) is substantially symmetrical about its longitudinal axis, the longitudinal axis of the blister (14) being an axis that is substantially parallel to the roll axis of the aircraft (2).

11. Apparatus according to any of Claims 1 to 12, wherein the outer surface of the blister (14) is substantially contiguous with a surface of the underside of the aircraft wing (10).

12. Apparatus according to any of Claims 1 to 11, wherein the aircraft wing (10) has a high aspect ratio.

13. Apparatus according to any of Claims 1 to 12, wherein the blister (14) is positioned on an underside portion of the aircraft wing (10) such that:
the blister (14) does not project from the underside of the aircraft wing (10) beyond a leading edge (12) of the aircraft wing (10) in a direction parallel to a roll axis of the aircraft (2); and
the blister (14) does not project from the underside of the aircraft wing (10) beyond a lowermost surface of the aircraft wing (10) in a direction parallel to a yaw axis of the aircraft (2).

14. A method of measuring values for parameters, the method comprising
using a first sensor, measuring a first parameter;
using a second sensor, measuring a second parameter; wherein
at least a part of the first sensor is either housed in a blister (14), or mounted on or integrated with an outer surface of the blister (14); and
at least a part of the second sensor is either housed in the blister (14), or mounted on or integrated with an outer surface of the blister (14);
the blister (14) is positioned on an underside of a wing of an aircraft (10); a measured value for the first parameter is dependent on a speed of the aircraft (2) in a first direction;
a measured value for the second parameter is dependent on a speed of the aircraft (2) in a second direction;
the first direction is in a plane perpendicular to a lateral axis of the aircraft (2); and
the second direction is in a plane perpendicular to a roll axis of the aircraft (2).

15. An aircraft (2) comprising apparatus according to any of Claims 1 to 13.
